# EUROPEAN PATENT APPLICATION

(11) **EP 4 733 175 A1**
(43) Date of publication of application: **29.04.2026**
(21) Application number: 25210579.6
(22) Date of filing: 22.10.2025
(51) Int. Cl.: B62D 7/14, B62D 9/00, B62D 7/15, B62D 5/04

(54) **STEERING ARRANGEMENT FOR ROBOTIC VEHICLE**

(30) Priority: 25.10.2024 US 202418927716
(71) Applicant: Avride Inc., Newburyport, MA 01950 (US)
(72) Inventor: ZAVADSKIY, Victor, Ann Arbor, 48103 (US); DODONOV, Alexey, Temecula, 92592 (US); PEREV, Iurii, 6721420 Tel-Aviv-Yafo (IL); NORIK, Yevhen, Austin, 78753 (US); DOROZHKIN, Pavel, Austin, 78717 (US); GOLIKOV, Andrei, Beograd (RS)
(74) Representative: BCF Global

(57) **Abstract**

A chassis assembly of a robotic vehicle, comprising a wheel assembly, including: a first front wheel (159) and a first back wheel (156), located on one side of the chassis assembly; a second front wheel (158) and a second back wheel (157), located on another side of the chassis assembly; a steering assembly, including: a first actuator motor (152) associated with one of the first front wheel (159) and the first back wheel (156); a second actuator motor (152) associated with one of the second front wheel (158) and the second back wheel (157); a linking assembly, including: a linking structure (153) coupling the first front wheel (159) and the first back wheel (156) for translating rotational motion of the one of the first front wheel and the first back wheel to the other one of the first front wheel and the first back wheel; another linking structure (160) coupling the second front wheel (158) and the second back wheel (157) for translating rotational motion similarly.

## Description

### TECHNICAL FIELD

The present technology relates to the field of robotic vehicles. More particularly, the present technology relates to a chassis for a robotic vehicle.

### BACKGROUND

Autonomous delivery robotic vehicles have gained popularity for providing contactless delivery services in various environments, including urban, suburban, and rural areas. These robotic vehicles are typically equipped with multiple wheels for mobility and employ various steering mechanisms to navigate different terrains and avoid obstacles.

Several approaches to steering and propulsion systems for robotic vehicles are known in the prior art.

**US Patent no.** US11840119B2, granted on December 12, 2023, discloses movable object such as a mobile robot is designed to be driven indoors or outdoors with improved stability. Stability is enhanced by an attitude control mechanism to improve attitude stability of the movable object in a direction perpendicular to a driving direction thereof. The movable object includes an attitude control motor including a connecting shaft having a first end connected to a body part and a second end connected to a wheel, wherein the second end of the connecting shaft is located higher or lower than the first end of the connecting shaft.

**US Patent Application Publication no.** US20230052470A1, published on February 16, 2023, discloses an autonomous driving vehicle including a front wheel support connected to a front wheel as one body and supporting the front wheel, and a knuckle arm angle adjustment assembly having one side to which a knuckle arm is connected, the knuckle arm moving with the front wheel during steering the front wheel, and knuckle arm angle adjustment assembly being coupled to one side of the front wheel support to be capable of angle adjustment for setting an inclination angle of the knuckle arm.

**Canadian Patent Application Publication no.** CA3099415A1, published on February 5, 2021, discloses an autonomous vehicle for passengers comprising four steerable wheels where each steerable wheel is steered by a steering system having a set of two actuators. One actuator of each set of actuators is powered by a first power source while the other actuator of the set of powered by a second power source. Four controllers each control one actuator of each set of actuators and one actuator from another set of actuators.

**Chinese Patent Application Publication no.** CN112478021A, published on March 12, 2021, discloses a mobile robot chassis, which comprises a chassis main body, a wheel assembly, a linkage mechanism and a first driving device, wherein the wheel assembly comprises a plurality of wheels, and each wheel is horizontally and rotatably arranged at the bottom of the chassis main body around an up-down axis; the linkage mechanism is respectively connected with the plurality of wheels; the first driving device is in driving connection with the linkage mechanism and used for driving the plurality of wheels to synchronously turn through the linkage mechanism. The synchronous and equidirectional rotation of the wheels is realized, so that the wheels are in a pure rolling state when turning, the transverse and in-situ rotation can be realized, and the stability and flexibility of the robot are greatly increased.

**Chinese Patent no.** CN210335936U, granted on April 17, 2020, discloses a special robot chassis, which comprises a frame, towing wheel groups respectively arranged at the two sides of the frame, driving wheels which are rotationally connected with the frame through a rotating shaft and are respectively positioned at the front end and the rear end of the towing wheel groups, and a track wound on the towing wheel groups and the driving wheels at the same side, wherein a driving device which can drive the driving wheels to rotate is arranged on the frame; one side that the frame was kept away from to the drive wheel is equipped with the tire, is equipped with rapid disassembly structure between tire and the drive wheel, and it includes the drive shaft of fixed connection on the drive wheel lateral wall, set up passive spring part in the drive shaft and install in wheel hub one side and slidable cup joint in the drive shaft with passive spring part joint complex initiative piece, the level is provided with on the initiative piece through pressing so that the subassembly is advanced in the top that initiative piece and passive spring part throw off. The utility model has the advantages that have two kinds of running gear of track and tire concurrently, make the staff can switch according to the different scene of topography or operating mode.

**The non-patent literature entitled "**The Use of Agricultural Robots in Orchard Management", authored by Qin Zhang, Manoj Karkee, and Amy Tabb, and published as a chapter in the book "Robotics and Automation for Improving Agriculture", by Burleigh Dodds Science Publishing, Cambridge, UK, in 2019, describes various robotic technologies applied to orchard management. The chapter discusses the use of automated systems for tasks such as pruning, thinning, and harvesting, highlighting the benefits of robotics in improving efficiency and reducing the reliance on manual labor in agricultural operations. These systems include a target sensing system, which may employ ultrasonic, infrared, laser, or Light Detection and Ranging (LiDAR) sensors to detect canopy characteristics such as size, depth, and foliage density, and a spraying control system to accurately deliver chemicals to targeted areas in the canopy. Some systems utilize machine vision to detect and localize specific canopy parts, allowing for chemical application to the identified areas.

**US Patent no.** US6634445B2, granted on October 21, 2003, discloses a skid steer vehicle includes a chassis mounted on four sprung suspensions that are controlled by an electronic controller. The controller monitors the speed of the vehicle and locks the suspensions when the vehicle falls below a predetermined speed.

**US Patent Application Publication no.** US20230380321A1, published on November 30, 2023 discloses a modular and reconfigurable autonomous electric robot capable of adapting to any type of condition and work in an agricultural environment, comprising: a symmetrical chassis comprising a front part, a middle part and a rear part; a power supply located at the front of the chassis; an implement located at the rear part of the chassis; two wheel assemblies each located at transversely opposite ends of the front of the chassis and two wheel assemblies each located at transversely opposite ends of the rear of the chassis; a GNSS unit to geolocate the electric robot in real time; and a processing and control module that controls the electric robot and is in data communication with the GNSS unit, where each wheel assembly located at the front of the chassis comprises a wheel with an electric motor directly coupled to the wheel.

**Chinese Patent No.** CN115741626B, granted on December 1, 2023, discloses an explosion-proof wheel type inspection robot, which relates to the technical field of robots and comprises a chassis, a battery, a circuit control board, a driving mechanism and wheels, wherein the driving mechanism drives the wheels to rotate; a heat dissipation mechanism is arranged on the chassis; the cabin body is provided with a boss around the opening, the boss surrounds the opening for a circle, and the cover plate is provided with a groove matched with the boss. The application has the effect of improving the antiknock capability of the robot.

**Chinese Patent No.** CN215244299U, granted on December 21, 2021, discloses a four-wheel differential drive control structure which is used for controlling the motion of wheels and comprises a base and a driving mechanism; the base is provided with a first side and a second side, the first side and the second side are both correspondingly provided with a plurality of wheels, and the number of the wheels on the first side is the same as that of the wheels on the second side; the driving mechanism comprises a first driving mechanism and a second driving mechanism; the first driving mechanism is arranged corresponding to the first side and comprises a motor, a driving shaft, a driven shaft and a conveyor belt, the driving shaft and the driven shaft can be rotatably connected to the base, wheels are mounted on the driving shaft and the driven shaft, the driving shaft and the driven shaft are matched and connected with the conveyor belt, the motor is mounted on the base, and the output end of the motor is in driving connection with the driving shaft so as to drive the wheels on the first side; the second driving mechanism is arranged corresponding to the second side, and the structure of the second driving mechanism is the same as that of the first driving mechanism so as to drive wheels on the second side.

**Chinese Patent No.** CN216940715U, granted on July 12, 2022, discloses a remove over-and-under type and patrol and examine robot, including removing chassis, robot, riser and two optical cameras, the robot is installed remove on the chassis, the riser is installed on the robot, two optical cameras are installed on the riser, the riser includes dead lever, lifter and electric putter, the lifter along the movably installation of direction of lift in the dead lever, electric putter set up in the dead lever and with the lifter is connected, is used for promoting the lifter is followed the dead lever is in the direction of lift upwards removes. The utility model provides a robot is patrolled and examined to removal over-and-under type adopts the riser of the relative dead lever drive lifter of electric putter, can realize raising and lowering functions in the short and thin space of office, and riser self has the guide effect, can save other guide structure's use, simplify inner structure.

**The non-patent literature entitled "**Differential Wheeled Robot", retrieved from Wikipedia on August 6, 2024, at 2:24 PM, describes the characteristics and principles of differential wheeled robots. These robots rely on two independently driven wheels placed on either side of the robot body to achieve movement and direction control. By varying the relative rotational speeds of the wheels, the robot can change its direction without requiring a separate steering mechanism. The document discusses kinematics, noting that the wheels' speeds determine the robot's instantaneous center of rotation, which lies along the line connecting the contact points of the wheels. It also describes the advantages of differential drive robots, including simplicity in motion programming and low cost, making them widely used in consumer robotics.

### SUMMARY

Developers have developed methods and devices for overcoming at least some drawbacks present in prior art solutions.

In some embodiments of the present technology, the developers have developed a chassis assembly for a robotic vehicle that utilizes a combination of mechanical steering and differential speed control to achieve versatile maneuverability. Embodiments of the present technology may have several advantages. Firstly, some embodiments of the present technology may enable enhanced reliability by allowing the robotic vehicle to continue operating even in the event of motor failures, as the steering motors and differential speed mechanisms may compensate for failed components to maintain mobility. Furthermore, some embodiments may reduce friction on wheels and power consumption during turns by avoiding applying any brakes on certain wheels during turning. Furthermore, some embodiments may enable the robotic vehicle to move in multiple directions, including reverse and sideways, which can be useful for tasks such as parking on inclines or making way for pedestrians. Additionally, some embodiments may provide enhanced maneuverability and precise trajectory control, allowing the robotic vehicle to execute sharp turns and navigate narrow spaces, such as sidewalks or tight parking areas.

In at least one aspect of the present technology, there is provided a method for controlling a chassis assembly, the chassis assembly being associated with a robotic vehicle, the method comprising: receiving a motion command indicative of a desired turning curvature for the robotic vehicle; determining a first operating parameter for a first actuator motor of the chassis assembly based on the motion command, the first operating parameter being indicative of a torque to be generated by the first actuator motor, the first actuator motor being operatively coupled to a first wheel of the chassis assembly; determining a second operating parameter for a second actuator motor of the chassis assembly based on the motion command, the second operating parameter being indicative of a torque to be generated by the second actuator motor, the second actuator motor being operatively coupled to a second wheel of the chassis assembly; determining a first speed of the first wheel based on the first operating parameter; and determining a second speed of the second wheel based on the second operating parameter.

In some embodiments of the method, the method further comprises receiving a first value indicative of a third speed of the first wheel; in response to a difference between the first speed and the third speed being above a first threshold, adjusting the first operating parameter based on the received first value; and adjusting the third speed based on the adjusted first operating parameter.

In some embodiments of the method, the method further comprises receiving a second value indicative of a fourth speed of the second wheel; in response to a difference between the second speed and the fourth speed being above a second threshold, adjusting the second operating parameter based on the received second value; and adjusting the fourth speed based on the adjusted second operating parameter.

In some embodiments of the method, the first speed is equal to the second speed if the desired turning curvature indicated by the motion command is below a third threshold.

In some embodiments of the method, the first speed is different from the second speed if the desired turning curvature indicated by the motion command is above the third threshold.

In some embodiments of the method, the method further comprises receiving a first operation command indicative of activation of a first steering motor of the chassis assembly, the first steering motor being operatively coupled to the first wheel and a third wheel of the chassis assembly; in response to the first operation command, adjusting the first speed and the second speed such that the first speed and the second speed are equal; and determining a third operating parameter based on the desired turning curvature, the third operating parameter being indicative of a steering torque to be generated by the first steering motor.

In some embodiments of the method, the first wheel is a first front wheel and the third wheel is a first back wheel, located on a first side of the chassis assembly.

In some embodiments of the method, the method further comprises receiving a third value indicative of a steering torque being generated by the first steering motor; in response to a difference between the steering torque indicated by the third operating parameter and the steering torque indicated by the third value being above a fourth threshold, adjusting the steering torque being generated by the first steering motor.

In some embodiments of the method, the method further comprises receiving a second operation command indicative of activation of a second steering motor of the chassis assembly, the second steering motor being operatively coupled to the second wheel and a fourth wheel of the chassis assembly; in response to the second operation command, adjusting the first speed and the second speed such that the first speed and the second speed are equal; and determining a fourth operating parameter based on the desired turning curvature, the fourth operating parameter being indicative of a steering torque to be generated by the second steering motor.

In some embodiments of the method, the second wheel is a second front wheel and the fourth wheel is a second back wheel, located on a second side of the chassis assembly.

In some embodiments of the method, the method further comprises receiving a fourth value indicative of a steering torque being generated by the second steering motor; in response to a difference between the steering torque indicated by the fourth operating parameter and the steering torque indicated by the fourth value being above a fifth threshold, adjusting the steering torque being generated by the second steering motor.

In some embodiments of the method, the first wheel is a first front wheel and the second wheel is a second front wheel.

In some embodiments of the method, the chassis assembly further including a third wheel and a fourth wheel, the third wheel being a first back wheel and the fourth wheel being a second back wheel, and wherein controlling a turning curvature of the first wheel causes controlling of a turning curvature of the third wheel by means of a mechanical connection between the first wheel and the third wheel; controlling a turning curvature of the second wheel causes controlling of a turning curvature of the fourth wheel by means of a mechanical connection between the second wheel and the fourth wheel.

In some embodiments of the method, the first wheel is a first back wheel and the second wheel is a second back wheel.

In some embodiments of the method, , the chassis assembly further including a third wheel and a fourth wheel, the third wheel being a first front wheel and the fourth wheel being a second front wheel, and wherein controlling the turning curvature of the first wheel causes controlling of the turning curvature of the third wheel by means of a mechanical connection between the first wheel and the third wheel; controlling the turning curvature of the second wheel causes controlling of the turning curvature of the fourth wheel by means of a mechanical connection between the second wheel and the fourth wheel.

In at least one aspect of the present technology, there is provided a chassis assembly associated with a robotic vehicle, the chassis assembly comprising: a first actuator motor operatively coupled to a first wheel; a second actuator motor operatively coupled to a second wheel; a control unit operatively connected to the first actuator motor and the second actuator motor, the control unit being configured to: receive a motion command indicative of a desired turning curvature for the robotic vehicle; determine a first operating parameter for a first actuator motor of the chassis assembly based on the motion command, the first operating parameter being indicative of a torque to be generated by the first actuator motor, the first actuator motor being operatively coupled to a first wheel of the chassis assembly; determine a second operating parameter for a second actuator motor of the chassis assembly based on the motion command, the second operating parameter being indicative of a torque to be generated by the second actuator motor, the second actuator motor being operatively coupled to a second wheel of the chassis assembly; determine a first speed of the first wheel based on the first operating parameter; and determine a second speed of the second wheel based on the second operating parameter.

In some embodiments of the chassis assembly, the control unit is further configured to receive a first value indicative of a third speed of the first wheel; in response to a difference between the first speed and the third speed being above a first threshold, adjust the first operating parameter based on the received first value; and adjust the third speed based on the adjusted first operating parameter.

In some embodiments of the chassis assembly, the control unit is further configured to receive a second value indicative of a fourth speed of the second wheel; in response to a difference between the second speed and the fourth speed being above a second threshold, adjust the second operating parameter based on the received second value; and adjust the fourth speed based on the adjusted second operating parameter.

In some embodiments of the chassis assembly, the first speed is equal to the second speed if the desired turning curvature indicated by the motion command is below a third threshold.

In some embodiments of the chassis assembly, the first speed is different from the second speed if the desired turning curvature indicated by the motion command is above the third threshold.

In some embodiments of the chassis assembly, the control unit is further configured to receive a first operation command indicative of activation of a first steering motor of the chassis assembly, the first steering motor being operatively coupled to the first wheel and a third wheel of the chassis assembly; in response to the first operation command, adjust the first speed and the second speed such that the first speed and the second speed are equal; and determine a third operating parameter based on the desired turning curvature, the third operating parameter being indicative of a steering torque to be generated by the first steering motor.

In some embodiments of the chassis assembly, the first wheel is a first front wheel and the third wheel is a first back wheel, located on a first side of the chassis assembly.

In some embodiments of the chassis assembly, the control unit is further configured to receive a third value indicative of a steering torque being generated by the first steering motor; in response to a difference between the steering torque indicated by the third operating parameter and the steering torque indicated by the third value being above a fourth threshold, adjust the steering torque being generated by the first steering motor.

In some embodiments of the chassis assembly, the control unit is further configured to receive a second operation command indicative of activation of a second steering motor of the chassis assembly, the second steering motor being operatively coupled to the second wheel and a fourth wheel of the chassis assembly; in response to the second operation command, adjust the first speed and the second speed such that the first speed and the second speed are equal; and determine a fourth operating parameter based on the desired turning curvature, the fourth operating parameter being indicative of a steering torque to be generated by the second steering motor.

In some embodiments of the chassis assembly, the second wheel is a second front wheel and the fourth wheel is a second back wheel, located on a second side of the chassis assembly.

In some embodiments of the chassis assembly, the control unit is further configured to receive a fourth value indicative of a steering torque being generated by the second steering motor; in response to a difference between the steering torque indicated by the fourth operating parameter and the steering torque indicated by the fourth value being above a fifth threshold, adjust the steering torque being generated by the second steering motor.

In some embodiments of the chassis assembly, a third actuator motor is operatively coupled to the third wheel and a fourth actuator motor is operatively coupled to the fourth wheel.

In some embodiments of the chassis assembly, the first wheel is a first front wheel and the second wheel is a second front wheel.

In some embodiments of the chassis assembly, the chassis assembly further including a third wheel and a fourth wheel, the third wheel being a first back wheel and the fourth wheel being a second back wheel, and wherein controlling a turning curvature of the first wheel causes controlling of a turning curvature of the third wheel by means of a mechanical connection between the first wheel and the third wheel; controlling a turning curvature of the second wheel causes controlling of a turning curvature of the fourth wheel by means of a mechanical connection between the second wheel and the fourth wheel.

In some embodiments of the chassis assembly, the first wheel is a first back wheel and the second wheel is a second back wheel.

In some embodiments of the chassis assembly, the chassis assembly further including a third wheel and a fourth wheel, the third wheel being a first front wheel and the fourth wheel being a second front wheel, and wherein controlling the turning curvature of the first wheel causes controlling of the turning curvature of the third wheel by means of a mechanical connection between the first wheel and the third wheel; controlling the turning curvature of the second wheel causes controlling of the turning curvature of the fourth wheel by means of a mechanical connection between the second wheel and the fourth wheel.

In at least one aspect of the present technology, there is provided a chassis assembly associated with a robotic vehicle, the chassis assembly comprising a wheel assembly, including: a first front wheel and a first back wheel, located on one side of the chassis assembly; a second front wheel and a second back wheel, located on a second side of the chassis assembly; a steering assembly, including: a first actuator motor associated with one of the first front wheel and the first back wheel; a second actuator motor associated with one of the second front wheel and the second back wheel; a linking assembly, including: a first linking structure operatively coupling the first front wheel and the first back wheel for translating rotational motion of the one of the first front wheel and the first back wheel to the other one of the first front wheel and the first back wheel; a second linking structure operatively coupling the second front wheel and the second back wheel for translating rotational motion of the one of the second front wheel and the second back wheel to the other one of the second front wheel and the second back wheel.

Additional and/or alternative features, aspects and advantages of implementations of the present technology will become apparent from the following description, the accompanying drawings and the appended claims.

### BRIEF DESCRIPTION OF THE DRAWINGS

These and other features, aspects and advantages of the present technology will become better understood with regard to the following description, appended claims and accompanying drawings where:
FIG. 1A depicts a side perspective view of a robotic vehicle, including a chassis assembly integrated with the robotic vehicle, in accordance with certain non-limiting embodiments of the present technology.
FIG. 1B depicts a bottom perspective view of the robotic vehicle, including the chassis assembly integrated with the robotic vehicle, in accordance with certain non-limiting embodiments of the present technology.
FIG. 2 depicts the chassis assembly of the robotic vehicle, in accordance with certain non-limiting embodiments of the present technology.
FIG. 3 illustrates various operational modes of the robotic vehicle, including different configurations of wheel orientations for distinct driving scenarios, in accordance with certain non-limiting embodiments of the present technology.
FIG. 4 depicts a schematic diagram of a computer system suitable for use with some implementations of the present technology.
FIG. 5 depicts a flowchart illustrating an example method for controlling a chassis assembly associated with a robotic vehicle.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor" or "controller", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

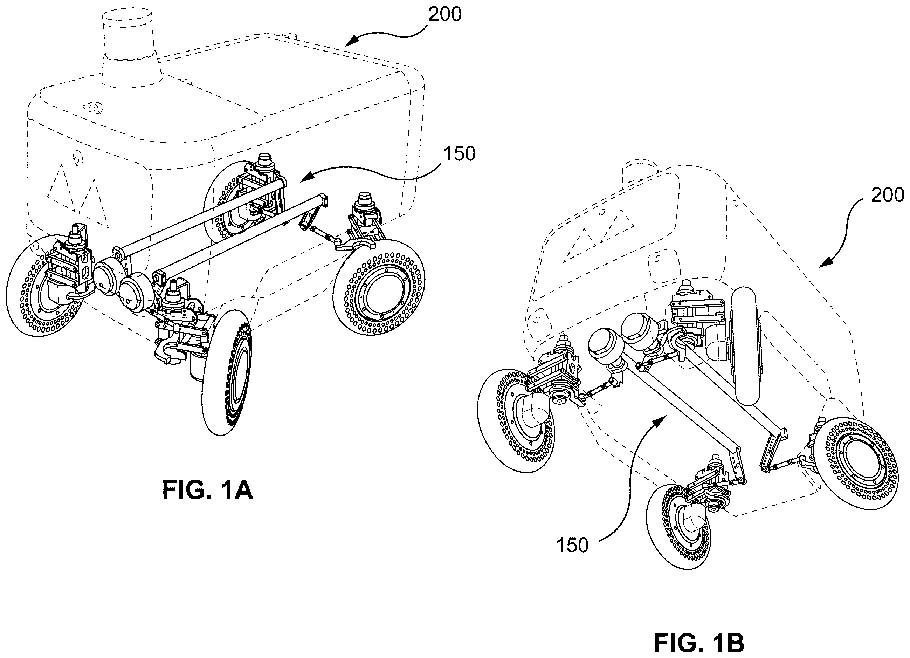

FIG. 1A depicts a side perspective view of a robotic vehicle 200. The robotic vehicle 200 comprises a chassis assembly 150 integrated with the robotic vehicle 200, in accordance with certain non-limiting embodiments of the present technology. FIG. 1B depicts a bottom perspective view of the robotic vehicle 200, including the chassis assembly 150 integrated with the robotic vehicle 200, in accordance with certain non-limiting embodiments of the present technology.

As depicted in FIG. 1A and 1B, the robotic vehicle 200 can be mounted on top of the chassis assembly 150 using techniques known in the art, such as by means of bolting, welding, or other attachment methods.

In some embodiments of the present technology, the robot vehicle 200 may be equipped with various sensors (not depicted) and systems (not depicted) to facilitate autonomous navigation and delivery tasks. These sensors and systems may include, but are not limited to, cameras (not depicted), LiDAR sensors (not depicted), ultrasonic sensors (not depicted), infrared sensors (not depicted), navigation system (not depicted) including Global Positioning System (GPS) modules (not depicted), Inertial Measurement Units (IMUs) (not depicted), motor encoders (not depicted), temperature sensors (not depicted), wireless communication system (not depicted), obstacle detection and avoidance system (not depicted) etc. These sensors and systems can be used for performing operations such object detection, obstacle avoidance, position tracking, speed monitoring, torque measurement, communication, environmental mapping etc.

For example, LiDAR sensors (not depicted) may provide distance measurements to detect obstacles and map the surrounding environment, while cameras (not depicted) can capture visual data for object recognition and localization. Ultrasonic sensors (not depicted) can detect nearby objects and prevent collisions, whereas the navigation system (not depicted) including GPS modules (not depicted) may be used for real-time positioning and route tracking. The wireless communication system (not depicted) can facilitate communication with remote operators (not depicted) when necessary.

IMUs (not depicted), which can measure acceleration and rotational rates, can be used to monitor the movement dynamics of the robot vehicle 200, including changes in speed and direction. Motor encoders (not depicted) can measure the rotational speed of the wheels and the torque generated by the actuator motors, enabling the detection of discrepancies between the actual speed and the commanded speed, as well as monitoring for potential motor failures. Additionally, temperature sensors (not depicted) may be used to monitor the motors' operating temperatures to detect any overheating that could indicate a malfunction.

The sensors may be communicatively coupled to the processor 110, which is configured to process the data from the sensors and make control decisions based on the information received. The processor 110 may use the sensor data to adjust the movement, speed, and direction of the robot vehicle 200.

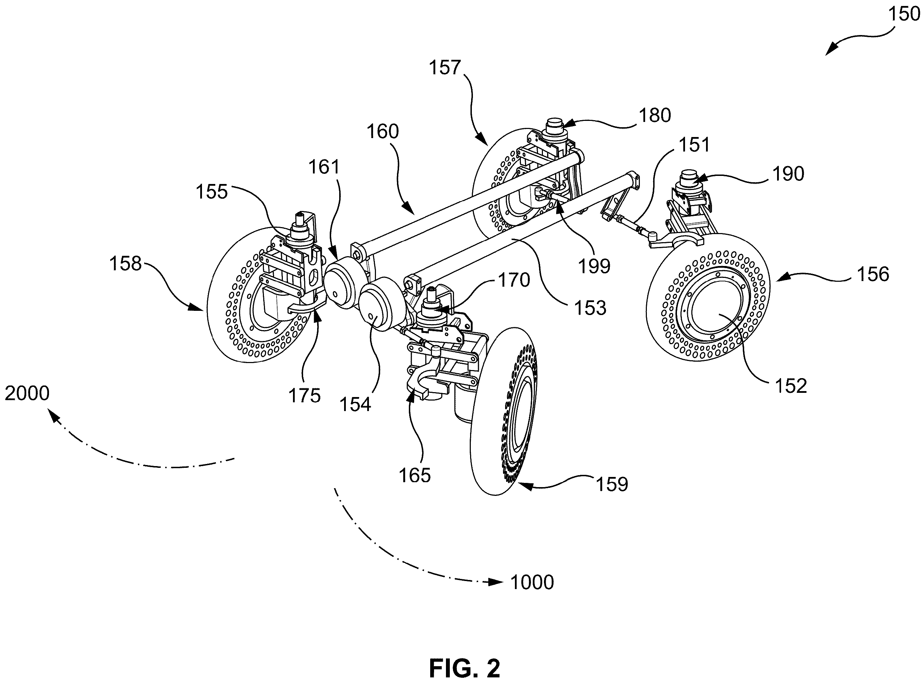

The chassis assembly 150 will be described in detail with reference to FIG. 2.

FIG. 2 depicts the aforementioned chassis assembly 150 that can be used with an autonomous delivery robotic vehicle, such as the robotic vehicle 200, in accordance with certain non-limiting embodiments of the present technology. The chassis assembly 150 supports the robotic vehicle's 200steering and propulsion systems (not separately depicted), providing structural support for various components that enable the movement of the robotic vehicle 200.

The chassis assembly 150 includes four wheels: each of the four wheels being respectively numbered at 156, 157, 158, and 159. The wheels are arranged as part of a wheel assembly, which can include two front wheels and two back wheels. For example, in some embodiments, the wheels 156 and 159 may be located on one side of the chassis assembly 150, where the wheel 159 may be designated as a front wheel and the wheel 156 may be designated as a back wheel. Similarly, the wheels 157 and 158 may be located on the opposite side of the chassis assembly 150, where the wheel 158 may be designated as a front wheel and the wheel 157 may be designated as a back wheel. The designation of which wheels are considered 'front' or 'back' and which sides are considered the 'one side' or 'opposite side' of the chassis assembly 150 may vary depending on the particular embodiment.

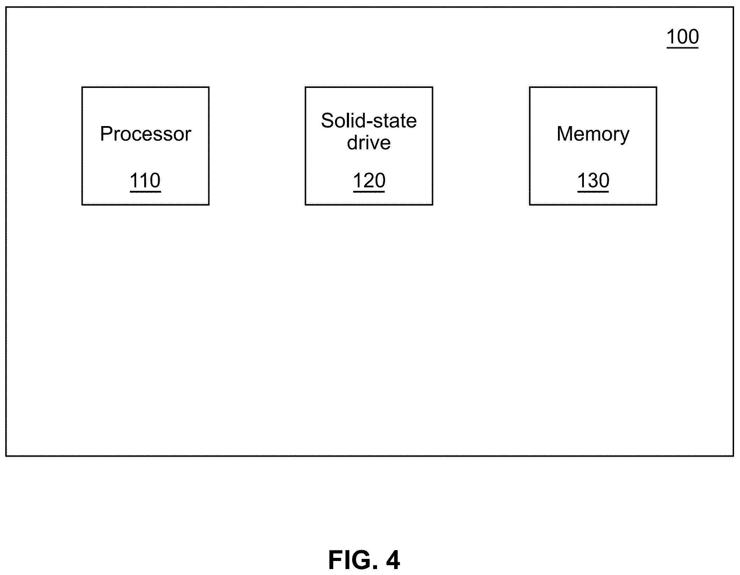

Each of the wheels 156, 157, 158, and 159 is driven by an actuator motor, which provides propulsion for individual wheel 156, 157, 158, and 159 movement. For example, a wheel 156 is driven by an actuator motor 152. Although only the actuator motor 152 of the wheel 156 is numerically referenced in FIG. 2, each wheel 156, 157, 158, and 159 is driven by its individual actuator motor (not separately numbered), as mentioned herein above. The actuator motors generate the torque needed to cause the wheels 156, 157, 158, and 159 to rotate around a horizontal axis (not depicted), thereby allowing each wheel 156, 157, 158, and 159 to be driven independently, and thus enabling the robotic vehicle 200 to move a long a terrain (not depicted). A processor 110 depicted in FIG. 4 and described in detail herein below with reference to FIG. 4 may be communicatively coupled to the actuator motors and may be configured to control the actuator motors, such as calculating the necessary torque for each actuator motor based on the desired movement and trajectory of the robotic vehicle 200. The desired movement can be inputted by an operator of the robotic vehicle 200 or otherwise retrieved from a memory (not depicted) of the processor 110. In some non-limiting embodiments, the actuator motors may be implemented using hub motors, direct drive motors, geared motors, or similar technologies that provide rotational power to the wheels 156, 157, 158, and 159.

In some non-limiting embodiments, the chassis assembly 150 may also include steering motors 154 and 175. In accordance with the non-limiting embodiments of the present technology, the steering motors 154 and 175 can perform a different function compared to the actuator motors, as described herein above. While the actuator motors, such as the actuator motor 152, generate the torque needed for driving the wheels 156, 157, 158, and 159 and produce movement over a surface, such as ground, the steering motors 154 and 175 generate the steering torque needed for adjusting the orientation of the wheels 156, 157, 158, and 159, allowing the robotic vehicle 200 to change direction, as well as any other desired maneuver thereof.

In some non-limiting embodiments of the present technology, as depicted in FIG. 2, only two of the wheels 156, 157, 158, and 159 may have independent steering capabilities. The steering of the other two wheels 156, 157, 158, and 159 may be controlled using steering mechanisms dependent on the steering of the wheels 156, 157, 158, and 159 with independent steering capabilities.

In the non-limiting embodiment depicted in FIG. 2, the wheels 158 and 159 have independent steering capabilities. The steering of the wheel 156 is controlled by the steering of the wheel 159, while the steering of the wheel 157 is controlled by the steering of the wheel 158. The processor 110 depicted in FIG. 4 may be configured to coordinate the steering operations of the wheels 156, 157, 158, and 159, as will be described in greater detail herein below.

The steering movement of the wheels 159 and 156 can be implemented via a steering assembly (not separately numbered), which includes a steering motor 154, a shaft 153, tie rods 165 and 151, and knuckles 170 and 190. The steering motor 154 generates steering torque, which is transmitted to wheel 159 through tie the rod 165, allowing the wheel 159 to be independently steered. The steering torque from steering motor 154 is further transmitted to the wheel 156 through a combination of the shaft 153 and the tie rod 151, enabling the steering of the wheel 156 to follow the steering of the wheel 159 through the mechanical linkage formed by the shaft 153 and the tie rod 151. The processor 110 depicted in FIG. 4 may be communicatively coupled to the steering motor 154 and may be configured to calculate the appropriate torque for the steering motor 154 based on the desired turning radius and direction. The processor 110 may further be configured to transmit control signals including the calculated torque to the steering motor 154 and receive feedback signals including the generated torque from the steering motor 154.

The knuckles 170 and 190 are structural components that connect the wheels 159 and 156 to the tie rods 165 and 151 respectively, allowing the wheels 159 and 156 to pivot around a vertical axis (not depicted) for steering movements.

In alternative non-limiting embodiments of the present technology, the mechanical linkage depicted using the shaft 153 and tie rod 151 in the presently illustrated embodiments, can be implemented differently, such as using interconnected metal rods, belts, chains, or other suitable mechanisms.

Similarly to the steering of the wheels 156 and 159, the steering movement of wheels 158 and 157 is achieved through a steering assembly, which includes a steering motor 161, a shaft 160, tie rods 175 and 199, and knuckles 155 and 180. The steering motor 161 generates steering torque, which is transmitted to the wheel 158 through the tie rod 165, allowing the wheel 158 to be independently steered. The steering torque from the steering motor 161 is further transmitted to the wheel 157 through a combination of the shaft 160 and the tie rod 199, enabling the steering of wheel 157 to follow the steering of the wheel 158 through the mechanical linkage formed by the shaft 160 and the tie rod 199. The processor 110 depicted in FIG. 4 may be communicatively coupled to the steering motor 161 and may be configured to calculate the appropriate torque for the steering motor 161 based on the desired turning radius and direction. The processor 110 may further be configured to transmit control signals including the calculate torque to the steering motor 161 and receive feedback signals including the generated torque from the steering motor 161.

The knuckles 155 and 180 are structural components that connect the wheels 158 and 157 to the tie rods 175 and 199 respectively, allowing the wheels 158 and 157 to pivot around a vertical axis (not depicted) for steering movements.

In alternative non-limiting embodiments of the present technology, the mechanical linkage depicted using the shaft 160 and tie rod 199 in the presently illustrated embodiments, can be implemented differently, such as using interconnected metal rods, belts, chains, or other suitable mechanisms.

In some non-limiting embodiments, the steering motors 154, 161 may either be omitted or deactivated under normal operations of the robotic vehicle 200. In such embodiments, instead of using dedicated motors for steering, the robotic vehicle 200 can be controlled to achieve steering through differential speed control of the wheels 156, 157, 158, and 159. In other words, the robotic vehicle 200 can be controlled to change direction by varying the speed of some or all of the wheels 156, 157, 158, and 159, where the relative speed difference between the wheels 156, 157, 158, and 159 on each side of the robotic vehicle 200 causes it to turn. The processor 110 may be configured to calculate the speed of each actuator motor to achieve the desired turn using a Proportional - Integral - Derivative (PID) controller (not depicted).

In those embodiments of the present technology where the differential speed control is used (which embodiments can include the steering motors 154,161 being omitted/de-activated or differential control can be used in addition to the steering motors 154,161 being used), turning is achieved by creating a speed difference between the wheels 156, 157, 158, and 159 on opposite sides of the robotic vehicle 200. When the wheels 156, 157, 158, and 159 on one side are propelled slower than the wheels 156, 157, 158, and 159 on the other side, the robotic vehicle 200 pivots toward the side with the slower-moving wheels 156, 157, 158, and 159, allowing it to turn in the direction of the slower-moving wheels 156, 157, 158, and 159.

For example, with reference to FIG. 2, steering of the robotic vehicle 200 towards direction 1000 can be achieved by propelling the wheels 159 and 156 at a slower speed than the wheels 158 and 157. This will cause the robotic vehicle 200 to pivot towards direction 1000.

Similarly, steering of the robotic vehicle 200 towards direction 2000 can be achieved by propelling the wheels 158 and 157 at a slower speed than the wheels 159 and 156.

In some embodiments, the robotic vehicle 200 may be configured to monitor the current angular orientation and the rotational speed of each wheel 156, 157, 158, and 159. For example, motor encoders (not depicted) may be used to obtain real-time data on the current angle and the rotational speed of the wheels 156, 157, 158, and 159. The processor 110 may use this data to dynamically adjust the speed difference between the wheels on opposite sides of the robotic vehicle 200 to achieve a desired turning curvature.

For example, in the scenario where the robotic vehicle 200 is desired to make a turn toward the direction 1000 and the measured wheel angles indicate that the robotic vehicle 200 is not following the desired turning curvature required for making a turn toward the direction 1000, the processor 110 may adjust the speed of the wheels such that the wheels 159 and 156 rotate at a slower speed compared to the wheels 158 and 157.

Similarly, in the scenario where the robotic vehicle 200 is desired to make a turn toward the direction 2000 and the measured wheel angles indicate that the robotic vehicle 200 is not following the desired turning curvature required for making a turn toward the direction 2000, the processor 110 may adjust the speed of the wheels such that the wheels 158 and 157 rotate at a slower speed compared to the wheels 159 and 156.

In embodiments that include steering motors, such as 154 and 161, the presence of the steering motors 154, 161 can enhance reliability in the event of motor failures, irrespective of whether the steering motors 154, 161are active or inactive during normal operation of the robotic vehicle 200. The processor 110 may be configured to engage the steering motors 154, 161 as needed to maintain mobility in case of failure.

In an example scenario involving single actuator motor failure, if an actuator motor associated with a wheel 156, 157, 158, and 159 fails, a steering motor can take over the task of positioning the affected wheel, while the remaining three operational actuator motors continue to provide sufficient propulsion to keep the robotic vehicle moving. For instance, if the actuator motor 152 associated with the wheel 156 fails, steering motor 154 can be used to adjust the orientation of wheel 156, while the other three actuator motors driving wheels 157, 158, and 159 continue to propel the robotic vehicle, allowing the robotic vehicle to maintain its mobility and perform necessary maneuvers until repairs can be made.

In another example scenario involving multiple actuator motor failures, even if three out of the four actuator motors driving the wheels fail, the robotic vehicle can still drive and perform turning maneuvers using only one active actuator motor and two steering motors. For example, if the actuator motors for wheels 158, 180 and 156 fail and only the actuator motor of wheel 159 is operational, the robotic vehicle can still drive using the propulsion provided by the actuator motor for wheel 159, while the steering motors 154 and 161 can pivot the wheels to navigate the robotic vehicle's movement towards different directions. This arrangement allows the robotic vehicle to maintain mobility, enabling it to drive and turn despite multiple actuator motor failures, until repairs can be made.

In another example scenario involving one or both steering motor failures, the robotic vehicle can still maintain driving and maneuvering capabilities by relying on differential speed control of the actuator motors. For instance, if both steering motors 154 and 161 fail, the robotic vehicle can continue to navigate by adjusting the speeds of the actuator motors associated with the wheels 152, 158, 157, and 159. By varying the rotational speeds of the wheels on either side of the robotic vehicle, directional changes can still be achieved as described before, allowing the robotic vehicle to steer and maintain mobility without functional steering motors. Hence, the robotic vehicle can continue operating autonomously despite the loss of steering motors, providing reliable service until repairs can be made.

This arrangement allows the robotic vehicle 200 to maintain mobility and complete its tasks autonomously, even in the presence of a motor failure, until it can be retrieved for repair. By leveraging differential speed control, the robotic vehicle 200 can still navigate and perform turning maneuvers with the functional actuator motors, ensuring reliable service without the immediate need for human intervention.

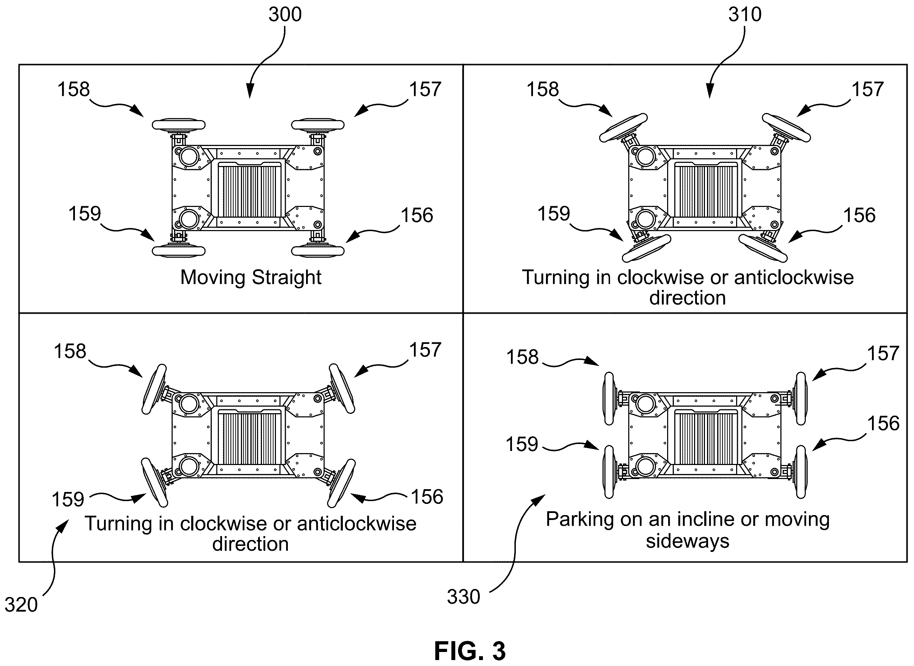

FIG. 3 illustrates various operational modes of the robotic vehicle 200, including different configurations of wheel orientations for distinct driving scenarios, in accordance with certain non-limiting embodiments of the present technology.

Different angular orientations of the wheels 156, 157, 158, and 159 can be used for steering the robotic vehicle 200 in different directions. The angular orientations of the wheels 156, 157, 158, and 159 for steering in different directions can be achieved by either controlling the steering motors 154 and 161 described previously with reference to FIG. 2, or by using the differential speed mechanism described previously with reference to FIG. 2; as well as a combination of both. The processor 110 may be configured to calculate the required wheel orientations and speed differentials for each maneuver based on the desired direction and trajectory of the robotic vehicle 200. The processor 110 may be further configured to coordinate the actuation of the steering motors or the adjustment of the differential speeds of the wheels 156, 157, 158, and 159 to achieve the intended movement.

For example, with reference to FIG. 3, in configuration 300, the robotic vehicle 200 is set up for moving straight, with all four wheels 156, 157, 158, and 159 aligned to point in the same direction as the desired motion, facilitating forward or backward movement.

For another example, with reference to FIG. 3, in configuration 310, wheels 158 and 159 are parallel to each other, and wheels 156 and 157 are also parallel to each other. However, the angular orientation of wheels 158 and 159 is opposite to that of wheels 156 and 157. This arrangement allows the robotic vehicle 200 to turn in either a clockwise or anticlockwise direction depending on the direction of actuation motor torque applied to the wheels. In some embodiments, the actuator motors can be configured to generate both clockwise and anticlockwise torques, allowing the configuration 310 to be used interchangeably for turning in either direction.

For another example, with reference to FIG. 3, in configuration 320, wheels 158 and 156 are parallel to each other, and wheels 159 and 157 are also parallel to each other. However, the angular orientation of wheels 158 and 156 is opposite to that of wheels 159 and 157. This arrangement also allows the robotic vehicle 200 to turn in either a clockwise or anticlockwise direction depending on the direction of actuation motor torque applied to the wheels. In some embodiments, the actuator motors can be configured to generate both clockwise and anticlockwise torques, allowing the configuration 320 to be used interchangeably for turning in either direction.

For another example, with reference to FIG. 3, in configuration 330, all four wheels 156, 157, 158, and 159 are parallel to each other and aligned toward the direction of sideways movement. This configuration allows the robotic vehicle 200 to perform maneuvers such as parking on an incline or moving sideways.

Referring to FIG. 4, there is depicted a schematic diagram of a computer system 100 suitable for use with some implementations of the present technology, generally referred to herein as the controller 100 or control unit 100. The controller 100 includes various hardware components including one or more single or multi-core processors collectively represented by a processor 110, a solid-state drive 120, and a memory 130, which may be a random-access memory or any other type of memory.

Communication between the various components of the control unit 100 may be enabled by one or more internal and/or external buses (not shown) (e.g. a PCI bus, universal serial bus, IEEE 1394 "Firewire" bus, SCSI bus, Serial-ATA bus, etc.), to which the various hardware components are electronically coupled. According to embodiments of the present technology, the solid-state drive 120 stores program instructions suitable for being loaded into the memory 130 and executed by the processor 110 for determining a presence of an object. For example, the program instructions may be part of a vehicle control application executable by the processor 110. It is noted that the controller 100 may have additional and/or optional components (not depicted), such as network communication modules, localization modules, and the like.

In some embodiments, the controller 100 may be implemented by any of a conventional personal computer, a controller, and/or an electronic device (e.g., a server, a controller unit, a control device, a monitoring device etc.) and/or any combination thereof appropriate to the relevant task at hand. In some other embodiments, the controller 100 may be an "off the shelf" generic computer system. In some embodiments, the controller 100 may also be distributed amongst multiple systems. The controller 100 may also be specifically dedicated to the implementation of the present technology. As a person in the art of the present technology may appreciate, multiple variations as to how the controller 100 is implemented may be envisioned without departing from the scope of the present technology.

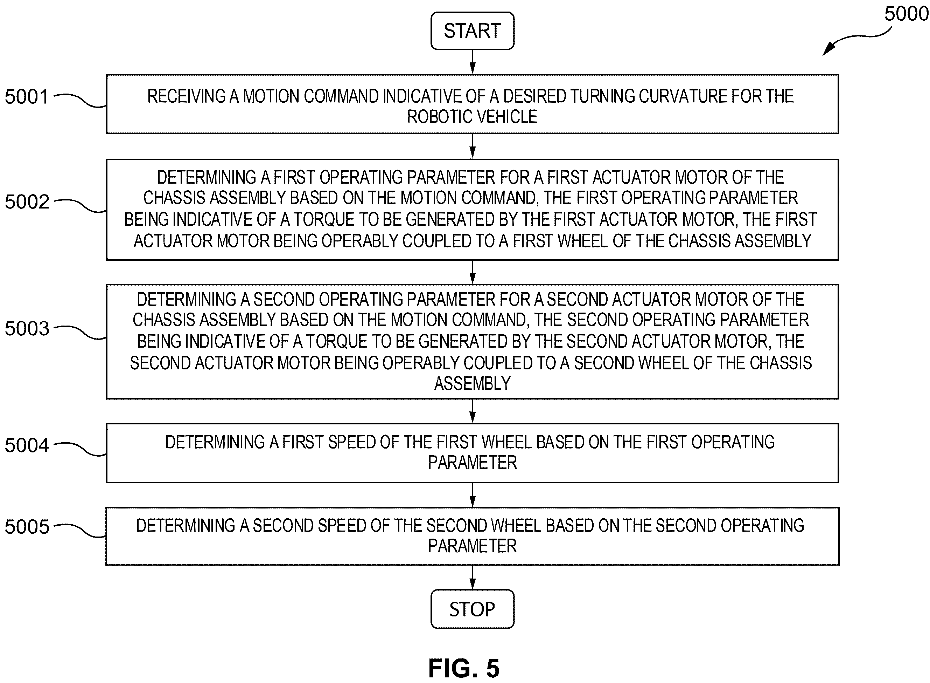

With reference to FIG. 5, in some embodiments of the present technology, a method 5000 may be employed by the processor 110 of the controller 100 to control the chassis assembly 150 associated with the robotic vehicle 200. Various steps of the method 5000 will now be described with greater detail.

The method 5000 begins at step 5001 with receiving a motion command indicative of a desired turning curvature for the robotic vehicle. For example, the processor 110 may receive a motion command from a navigation system (not depicted) onboard the robotic vehicle 200, such as a GPS-based path planning module (not depicted) or an obstacle detection system (not depicted) including sensors like LiDARs (not depicted), cameras (not depicted) etc. In another example scenario, the motion command could be received by the processor 110 from a remote operator (not depicted) via a wireless communication system (not depicted).

The method 5000 continues to step 5002 with determining a first operating parameter for a first actuator motor of the chassis assembly based on the motion command, the first operating parameter being indicative of a torque to be generated by the first actuator motor, the first actuator motor being operatively coupled to a first wheel of the chassis assembly. For example, the processor 110 may determine the first operating parameter using the desired turning curvature indicated by the motion command and determine the amount of torque that should be generated by a first actuator motor, for example, the actuator motor operatively coupled to the wheel 159 of the chassis assembly 150.

The method 5000 continues to step 5003 with determining a second operating parameter for a second actuator motor of the chassis assembly based on the motion command, the second operating parameter being indicative of a torque to be generated by the second actuator motor, the second actuator motor being operatively coupled to a second wheel of the chassis assembly. For example, the processor 110 may determine the second operating parameter using the desired turning curvature indicated by the motion command and determine the amount of torque that should be generated by a second actuator motor, for example, the actuator motor operatively coupled to the wheel 158 of the chassis assembly 150.

The method 5000 continues to step 5004 with determining a first speed of the first wheel based on the first operating parameter. For example, the processor 110 may determine the speed of the wheel 159 using a PID controller, based on the torque indicated by the first operating parameter.

The method 5000 continues to step 5005 with determining a second speed of the second wheel based on the second operating parameter. For example, the processor 110 may determine the speed of the wheel 158 using a PID controller, based on the torque indicated by the second operating parameter.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

While the above-described implementations have been described and shown with reference to particular steps performed in a particular order, it will be understood that some of these steps may be combined, sub-divided, or re-ordered without departing from the teachings of the present technology. Accordingly, the order and grouping of the steps is not a limitation of the present technology.

## Claims

1. A method for controlling a chassis assembly, the chassis assembly being associated with a robotic vehicle, the method comprising:
receiving a motion command indicative of a desired turning curvature for the robotic vehicle;
determining a first operating parameter for a first actuator motor of the chassis assembly based on the motion command, the first operating parameter being indicative of a torque to be generated by the first actuator motor, the first actuator motor being operatively coupled to a first wheel of the chassis assembly;
determining a second operating parameter for a second actuator motor of the chassis assembly based on the motion command, the second operating parameter being indicative of a torque to be generated by the second actuator motor, the second actuator motor being operatively coupled to a second wheel of the chassis assembly;
determining a first speed of the first wheel based on the first operating parameter; and
determining a second speed of the second wheel based on the second operating parameter.

2. The method of claim 1, further comprising:
receiving a first value indicative of a third speed of the first wheel;
in response to a difference between the first speed and the third speed being above a first threshold, adjusting the first operating parameter based on the received first value; and
adjusting the third speed based on the adjusted first operating parameter.

3. The method of claim 1, further comprising:
receiving a second value indicative of a fourth speed of the second wheel;
in response to a difference between the second speed and the fourth speed being above a second threshold, adjusting the second operating parameter based on the received second value; and
adjusting the fourth speed based on the adjusted second operating parameter.

4. The method of claim 1, wherein the first speed is equal to the second speed if the desired turning curvature indicated by the motion command is below a third threshold.

5. The method of claim 1, wherein the first speed is different from the second speed if the desired turning curvature indicated by the motion command is above the third threshold.

6. The method of claim 1, further comprising:
receiving a first operation command indicative of activation of a first steering motor of the chassis assembly, the first steering motor being operatively coupled to the first wheel and a third wheel of the chassis assembly;
in response to the first operation command, adjusting the first speed and the second speed such that the first speed and the second speed are equal; and
determining a third operating parameter based on the desired turning curvature, the third operating parameter being indicative of a steering torque to be generated by the first steering motor.

7. The method of claim 6, wherein the first wheel is a first front wheel and the third wheel is a first back wheel, located on a first side of the chassis assembly.

8. The method of claim 6, further comprising:
receiving a third value indicative of a steering torque being generated by the first steering motor;
in response to a difference between the steering torque indicated by the third operating parameter and the steering torque indicated by the third value being above a fourth threshold, adjusting the steering torque being generated by the first steering motor.

9. The method of claim 1, further comprising:
receiving a second operation command indicative of activation of a second steering motor of the chassis assembly, the second steering motor being operatively coupled to the second wheel and a fourth wheel of the chassis assembly;
in response to the second operation command, adjusting the first speed and the second speed such that the first speed and the second speed are equal; and
determining a fourth operating parameter based on the desired turning curvature, the fourth operating parameter being indicative of a steering torque to be generated by the second steering motor.

10. The method of claim 9, wherein the second wheel is a second front wheel and the fourth wheel is a second back wheel, located on a second side of the chassis assembly.

11. The method of claim 9, further comprising:
receiving a fourth value indicative of a steering torque being generated by the second steering motor;
in response to a difference between the steering torque indicated by the fourth operating parameter and the steering torque indicated by the fourth value being above a fifth threshold, adjusting the steering torque being generated by the second steering motor.

12. The method of claim 1, wherein:
the first wheel is a first front wheel and the second wheel is a second front wheel.

13. The method of claim 12, the chassis assembly further including a third wheel and a fourth wheel, the third wheel being a first back wheel and the fourth wheel being a second back wheel, and wherein
controlling a turning curvature of the first wheel causes controlling of a turning curvature of the third wheel by means of a mechanical connection between the first wheel and the third wheel;
controlling a turning curvature of the second wheel causes controlling of a turning curvature of the fourth wheel by means of a mechanical connection between the second wheel and the fourth wheel.

14. The method of claim 1, wherein:
the first wheel is a first back wheel and the second wheel is a second back wheel.

15. The method of claim 14, the chassis assembly further including a third wheel and a fourth wheel, the third wheel being a first front wheel and the fourth wheel being a second front wheel, and wherein
controlling the turning curvature of the first wheel causes controlling of the turning curvature of the third wheel by means of a mechanical connection between the first wheel and the third wheel;
controlling the turning curvature of the second wheel causes controlling of the turning curvature of the fourth wheel by means of a mechanical connection between the second wheel and the fourth wheel.

16. A chassis assembly associated with a robotic vehicle, the chassis assembly comprising:
a first actuator motor operatively coupled to a first wheel;
a second actuator motor operatively coupled to a second wheel;
a control unit operatively connected to the first actuator motor and the second actuator motor, the control unit being configured to:
receive a motion command indicative of a desired turning curvature for the robotic vehicle;
determine a first operating parameter for a first actuator motor of the chassis assembly based on the motion command, the first operating parameter being indicative of a torque to be generated by the first actuator motor, the first actuator motor being operatively coupled to a first wheel of the chassis assembly;
determine a second operating parameter for a second actuator motor of the chassis assembly based on the motion command, the second operating parameter being indicative of a torque to be generated by the second actuator motor, the second actuator motor being operatively coupled to a second wheel of the chassis assembly;
determine a first speed of the first wheel based on the first operating parameter; and
determine a second speed of the second wheel based on the second operating parameter.

17. The chassis assembly of claim 16, wherein the control unit is further configured to:
receive a first value indicative of a third speed of the first wheel;
in response to a difference between the first speed and the third speed being above a first threshold, adjust the first operating parameter based on the received first value; and
adjust the third speed based on the adjusted first operating parameter.

18. The chassis assembly of claim 16, wherein the control unit is further configured to:
receive a second value indicative of a fourth speed of the second wheel;
in response to a difference between the second speed and the fourth speed being above a second threshold, adjust the second operating parameter based on the received second value; and
adjust the fourth speed based on the adjusted second operating parameter.

19. The chassis assembly of claim 16, wherein the first speed is equal to the second speed if the desired turning curvature indicated by the motion command is below a third threshold.

20. The chassis assembly of claim 16, wherein the first speed is different from the second speed if the desired turning curvature indicated by the motion command is above the third threshold.

21. The chassis assembly of claim 16, wherein the control unit is further configured to:
receive a first operation command indicative of activation of a first steering motor of the chassis assembly, the first steering motor being operatively coupled to the first wheel and a third wheel of the chassis assembly;
in response to the first operation command, adjust the first speed and the second speed such that the first speed and the second speed are equal; and
determine a third operating parameter based on the desired turning curvature, the third operating parameter being indicative of a steering torque to be generated by the first steering motor.

22. The chassis assembly of claim 21, wherein the first wheel is a first front wheel and the third wheel is a first back wheel, located on a first side of the chassis assembly.

23. The chassis assembly of claim 21, wherein the control unit is further configured to:
receive a third value indicative of a steering torque being generated by the first steering motor;
in response to a difference between the steering torque indicated by the third operating parameter and the steering torque indicated by the third value being above a fourth threshold, adjust the steering torque being generated by the first steering motor.

24. The chassis assembly of claim 16, wherein the control unit is further configured to:
receive a second operation command indicative of activation of a second steering motor of the chassis assembly, the second steering motor being operatively coupled to the second wheel and a fourth wheel of the chassis assembly;
in response to the second operation command, adjust the first speed and the second speed such that the first speed and the second speed are equal; and
determine a fourth operating parameter based on the desired turning curvature, the fourth operating parameter being indicative of a steering torque to be generated by the second steering motor.

25. The chassis assembly of claim 24, wherein the second wheel is a second front wheel and the fourth wheel is a second back wheel, located on a second side of the chassis assembly.

26. The chassis assembly of claim 24, wherein the control unit is further configured to:
receive a fourth value indicative of a steering torque being generated by the second steering motor;
in response to a difference between the steering torque indicated by the fourth operating parameter and the steering torque indicated by the fourth value being above a fifth threshold, adjust the steering torque being generated by the second steering motor.

27. The chassis assembly of claim 24, wherein a third actuator motor is operatively coupled to the third wheel and a fourth actuator motor is operatively coupled to the fourth wheel.

28. The chassis assembly of claim 16, wherein:
the first wheel is a first front wheel and the second wheel is a second front wheel.

29. The chassis assembly of claim 28, the chassis assembly further including a third wheel and a fourth wheel, the third wheel being a first back wheel and the fourth wheel being a second back wheel, and wherein
controlling a turning curvature of the first wheel causes controlling of a turning curvature of the third wheel by means of a mechanical connection between the first wheel and the third wheel;
controlling a turning curvature of the second wheel causes controlling of a turning curvature of the fourth wheel by means of a mechanical connection between the second wheel and the fourth wheel.

30. The chassis assembly of claim 16, wherein:
the first wheel is a first back wheel and the second wheel is a second back wheel.

31. The chassis assembly of claim 30, the chassis assembly further including a third wheel and a fourth wheel, the third wheel being a first front wheel and the fourth wheel being a second front wheel, and wherein
controlling the turning curvature of the first wheel causes controlling of the turning curvature of the third wheel by means of a mechanical connection between the first wheel and the third wheel;
controlling the turning curvature of the second wheel causes controlling of the turning curvature of the fourth wheel by means of a mechanical connection between the second wheel and the fourth wheel.

32. A chassis assembly associated with a robotic vehicle, the chassis assembly comprising:
a wheel assembly, including:
a first front wheel and a first back wheel, located on one side of the chassis assembly;
a second front wheel and a second back wheel, located on a second side of the chassis assembly;
a steering assembly, including:
a first actuator motor associated with one of the first front wheel and the first back wheel;
a second actuator motor associated with one of the second front wheel and
the second back wheel;
a linking assembly, including:
a first linking structure operatively coupling the first front wheel and the first back wheel for translating rotational motion of the one of the first front wheel and the first back wheel to the other one of the first front wheel and the first back wheel;
a second linking structure operatively coupling the second front wheel and the second back wheel for translating rotational motion of the one of the second front wheel and the second back wheel to the other one of the second front wheel and the second back wheel.
